# EUROPEAN PATENT SPECIFICATION

(11) **EP 3 007 072 B1**
(45) Date of publication and mention of the grant of the patent: **21.11.2018**
(21) Application number: 14804415.9
(22) Date of filing: 27.05.2014
(51) Int. Cl.: H04W 4/021, H04W 4/02, H04L 29/08, G06Q 30/02

(54) **METHOD FOR DISPLAYING SITE PAGE RELATED TO CURRENT POSITION IN DESIRED CONDITION ORDER IN PORTABLE TERMINAL, AND SYSTEM**
VERFAHREN ZUR ANZEIGE EINER STANDORTSEITE IM ZUSAMMENHANG MIT DER AKTUELLEN POSITION IN EINER GEWÜNSCHTEN ZUSTANDSREIHENFOLGE BEI EINEM TRAGBAREN ENDGERÄT UND SYSTEM
PROCÉDÉ D'AFFICHAGE D'UNE PAGE DE SITE LIÉ À LA POSITION ACTUELLE PAR ORDRE DE CONDITIONS SOUHAITÉES SUR UN TERMINAL PORTABLE, ET SYSTÈME ASSOCIÉ

(30) Priority: 28.05.2013 JP 2013111526
(43) Date of publication of application: 13.04.2016
(73) Proprietor: TAP AROUND INC., Warabi-city Saitama 3350003 (JP)
(72) Inventor: ANDO, Yuta, Warabi-city, Saitama 3350003 (JP)
(74) Representative: Hofmann, Ralf U.
(86) International application number: PCT/JP2014/063955
(87) International publication number: WO 2014/192736

(56) References cited:
- EP-A1- 2 437 463
- WO-A1-2008/114811
- WO-A1-2009/150732
- JP-A- H09 153 054
- JP-A- 2002 132 806
- JP-A- 2004 272 492
- JP-A- 2005 151 224
- JP-A- 2006 268 771
- JP-A- 2008 257 537
- JP-A- 2012 018 591
- US-A1- 2009 164 411
- US-A1- 2011 320 307
- US-A1- 2012 197 765

## Description

### TECHNICAL FIELD

The present invention relates to a technique that causes a portable terminal to acquire a site page of a Web server through an access point.

### BACKGROUND ART

With the development of the Internet, site pages of Web servers have become the important advertisement media of companies or stores. In general, it is considered that large companies want to make a large number of persons browse their Web sites, regardless of areas. At that time, when the Internet is used, the distance between the actual position of the company and the position of the user who accesses to the Web site is not significant in terms of the effect of advertisement.

In contrast, it is considered that small local stores want to make particularly persons, who reside in the vicinity area, browse their Web sites. For example, when the user uses, for example, restaurants or fresh food stores, the user needs to actually visit the stores. Therefore, the Web site of the store is unnecessary for persons who are far away to visit the store.

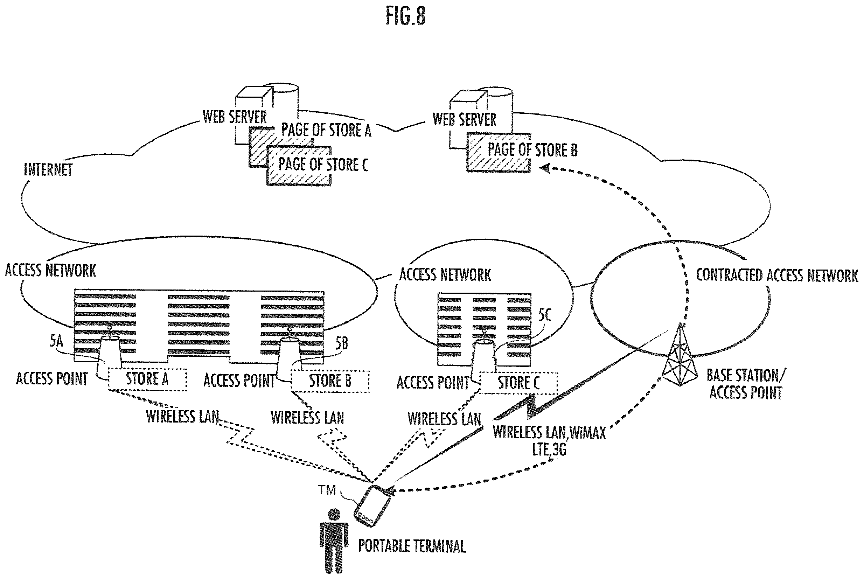

Fig. 8 is a diagram illustrating the structure of a conventional system according to the related art which causes a portable terminal to acquire site pages.

As illustrated in Fig. 8, stores A to C, which are the actual stores, are located at different positions or operated in different areas from each other. Access points 5A, 5B and 5C are installed in the stores A, B, and C, respectively. In some cases, the access points are used for business in the stores or are used by the customers for purposes other than the business of the stores. In addition, each of the access points 5A to 5C is connected to the Internet which is a wide area network through an access network that contracts with the individual stores, for example, an optical network.

Each of the stores A to C contracts with a Web server operator which is installed on the Internet and publishes the site page of the store through the Web server. The site pages are pages which are the advertisement media of the stores A to C and are browsed by the customers to attract the customers.

As illustrated in Fig. 8, a portable terminal TM is located at the position where it can receive a beacon signal, which is an annunciation signal of a wireless local area network (LAN), from each of the access points 5A to 5C. In addition, the portable terminal TM can be connected to the Internet through the access network with which the user individually contracts. The access network with which the portable terminal TM contracts is not limited to the wireless LAN and may be, for example, a worldwide interoperability for microwave access (WiMAX) network, a long term evolution (LTE) network, or a 3rd generation (3G) network.

The user can search for neighboring access points using the portable terminal TM and find the access network which contracts with the user. Specifically, the portable terminal can receive the annunciation signals including the addresses of the access points from the neighboring access points and find the address of the access network which contracts with the user from the access points. For example, in the case of the wireless LAN, the annunciation signal is a beacon signal or a probe response. In response to an operation of the user, the portable terminal TM can be connected to an access point or a base station of the contracted access network.

The portable terminal TM is, for example, a smart phone or a tablet terminal and a Web browser is installed in the portable terminal TM such that the portable terminal TM renders the site pages on a display. The portable terminal TM is connected to the Internet through the access network which contracts with the user and accesses the site pages of the Web servers which contract with the stores A to C. Therefore, the user can browse the site pages.

For example, Patent Document 1 discloses an advertisement providing system in which a terminal receives a beacon signal transmitted from an access point, stores the history of a service set identifier (SSID) included in the beacon signal, transmits the history to a server, and receives advertisement information associated with the SSID from the server.

For example, Patent Document 2 discloses a technique in which a base station informs a terminal of a beacon signal including the address of a server and an identifier of the base station and the terminal receives the beacon signal, transmits a page acquisition request including the identifier of the base station to the address of the server, and acquires information about content distributed by the base station.

For example, Patent Document 3 discloses a technique in which a server stores area information corresponding to a position, an access point has the identification information of the position, and a wireless terminal transmits a request signal including the identification information of the position acquired from the access point to the server and acquires the area information.

### RELEVANT PRIOR ART

Document US2012197765 discloses an application store server that provides, for each IP address of an access point detected by a mobile terminal, information about corresponding categories and brand names.

### DISCLOSURE OF THE INVENTION

### PROBLEM TO BE SOLVED BY THE INVENTION

For example, in a business area or a downtown area, when the portable terminal TM searches for neighboring access points, a plurality of access points are actually searched. In this case, the user needs to perform an operation of selecting a desired access point from the searched access points while browsing a plurality of SSIDs. As in the techniques disclosed in the above-mentioned Patent Documents 1 to 3, even when content which corresponds to the identifier based on the position of the access point or the base station is received from the server, the user needs to perform an operation of selecting a desired access point.

In the techniques disclosed in Patent Documents 1 to 3, even when a person who keeps a small store wants to distribute a site page to the portable terminal, the user has a right to select any one of the SSIDs of a plurality of access points. The user can select only the access point which is a connection destination from a plurality of SSIDs. It is hardly possible for the user to acquire content based on a strange access point in terms of security. That is, in the techniques disclosed in Patent Documents 1 to 3, the user of the portable terminal can acquire only the area information associated with the SSID of the known access point.

In addition, it is considered that the storekeeper wants many users to browse the characteristic information of the store, that is, the storekeeper wants the user who desires the characteristic information of the store to browse the site page of the store as much as possible. In contrast, it is considered that the user wants to browse the site page that provides desired information as much as possible. However, as described above, only the user selects the SSID of the access point, while it is difficult for the user to know whether there is desired information in the site page of the store before browsing.

Accordingly, an object of the invention is to provide a method and system which can provide a portable terminal with information satisfying desired conditions among site pages related to the current position even at a position where a plurality of access points are searched, without the user making any selections.

### MEANS FOR SOLVING PROBLEM

The invention is defined by a method according to claim 1. Further embodiments are defined by the dependent claim.

According to the invention, there is provided a page acquisition method performed in a system including a plurality of site servers that are connected to a wide area network, a plurality of access points that transmit annunciation signals including their addresses, a portable terminal that is connected to the wide area network and acquires pages from the site servers, and a proxy server that includes an address correspondence table in which reference information related to a site page is associated with each set of an address of the access point and an address of the site page and is connected to the wide area network. The method includes: a first step of allowing the portable terminal to search for the access points in vicinity of the portable terminal and to receive the annunciation signal including the address of the access point from each access point; a second step of allowing the portable terminal to transmit, to the proxy server, a page acquisition request including the address of each access point included in the annunciation signal and query information for searching for reference information of the site page; a third step of allowing the proxy server to search for the address of the site page corresponding to the address of each access point included in the page acquisition request, using the address correspondence table; a fourth step of allowing the proxy server to generate list information in which the searched addresses of a plurality of site pages are arranged such that the address having the reference information related to the query information ranks high; a fifth step of allowing the proxy server to transmit the list information as a response to the portable terminal; and a sixth step of allowing the portable terminal to present the list information to a user.

According to the invention, there is provided a page acquisition method performed in a system including a plurality of site servers that are connected to a wide area network, a plurality of access points that transmit annunciation signals including their addresses, a portable terminal that is connected to the wide area network and acquires pages from the site servers, and a proxy server that includes an address correspondence table in which an address of a site page is associated with an address of each access point and is connected to the wide area network. The method includes: a first step of allowing the portable terminal to search for the access points in vicinity of the portable terminal and to receive the annunciation signal including the address of the access point from each access point; a second step of allowing the portable terminal to transmit, to the proxy server, a page acquisition request including the address of each access point included in the annunciation signal and query information for searching for the site page; a third step of allowing the proxy server to search for the address of the site page corresponding to the address of each access point included in the page acquisition request, using the address correspondence table; a fourth step of allowing the proxy server to search for content of the site page with the searched address as reference information using the query information and to generate list information in which the addresses of a plurality of site pages are arranged such that the address having the reference information related to the query information ranks high; a fifth step of allowing the proxy server to transmit the list information as a response to the portable terminal; and a sixth step of allowing the portable terminal to present the list information to a user.

In the two page acquisition methods, in the sixth step, one or more page acquisition requests having one or more addresses in the list information as destinations may be transmitted to the corresponding site servers.

According to an embodiment of the page acquisition method of the invention, the reference information may be an update time related to the site page and the query information may be order designation information which is designated by the user. In the fourth step, the proxy server may generate list information in which the searched addresses of a plurality of site pages are arranged in order of the update time which is the reference information according to the order designation information which is the query information.

According to another embodiment of the page acquisition method of the invention, the reference information may be a message or keyword group related to the site page and the query information may be a keyword which is designated by the user. In the fourth step, the proxy server may generate list information in which the searched addresses of a plurality of site pages are arranged such that the message or keyword group, which is the reference information, including a larger number of keywords, which is the query information, ranks higher.

According to still another embodiment of the page acquisition method of the invention, the reference information may be an image related to the site page and the query information may be an image which is designated by the user. In the fourth step, the proxy server may generate list information in which the searched addresses of a plurality of site pages are arranged in descending order of the similarity of the image which is the reference information to the image which is the query information.

According to yet another embodiment of the page acquisition method of the invention, the portable terminal may acquire positional information in advance on the basis of user's designation, a global positioning system (GPS) positioning method, or a base station positioning method. The reference information may be positional information related to the site page and the query information may be positional information of the portable terminal. In the fourth step, the proxy server may generate list information in which the searched addresses of a plurality of site pages are arranged in increasing order of a distance between a position related to the positional information which is the query information and a position related to the positional information which is the reference information.

According to still yet another embodiment of the page acquisition method of the invention, the portable terminal may acquire a moving speed in advance using a GPS positioning method or a sensor positioning method. The reference information may be a moving speed range related to the site page and the query information may be a moving speed of the portable terminal. In the fourth step, the proxy server may generate list information in which the searched addresses of a plurality of site pages are arranged such that the address where the moving speed range, which is the reference information, includes the moving speed, which is the query information, ranks high.

According to yet still another embodiment of the page acquisition method of the invention, the portable terminal may acquire temperature, atmospheric pressure, and/or humidity measured by a sensor in advance. The reference information may be a temperature range, an atmospheric pressure range, and/or a humidity range related to the site page and the query information may be the temperature, atmospheric pressure, and/or humidity of the portable terminal. In the fourth step, the proxy server may generate list information in which the searched addresses of a plurality of site pages are arranged such that the address where the temperature range, the atmospheric pressure range, and/or the humidity range, which is the reference information, includes the temperature, the atmospheric pressure, and/or the humidity, which is the query information, ranks high.

According to still yet another embodiment of the page acquisition method of the invention, the reference information may be audio data related to the site page and the query information may be audio data which is acquired in advance by the portable terminal. In the fourth step, the proxy server may generate list information in which the searched addresses of a plurality of site pages are arranged in descending order of the similarity of the audio data which is the reference information to the audio data which is the query information.

According to the invention, there is provided a page acquisition method performed in a system including a plurality of site servers that are connected to a wide area network, a plurality of access points that transmit annunciation signals including their addresses, a portable terminal that is connected to the wide area network and acquires pages from the site servers, and a proxy server that includes an address correspondence table in which reference information related to a site page is associated with each set of an address of the access point and an address of the site page and is connected to the wide area network. The portable terminal stores query information for searching for the reference information of the site page. The method includes: a first step of allowing the portable terminal to search for the access points in the vicinity of the portable terminal and to receive the annunciation signal including the address of the access point from each access point; a second step of allowing the portable terminal to transmit, to the proxy server, a page acquisition request including the address of each access point included in the annunciation signal; a third step of allowing the proxy server to search for the address of the site page corresponding to the address of each access point included in the page acquisition request, using the address correspondence table; a fourth step of allowing the proxy server to generate list information in which the reference information of the site pages is associated with the searched addresses of a plurality of site pages; a fifth step of allowing the proxy server to transmit the list information as a response to the portable terminal; and a sixth step of allowing the portable terminal to arrange the addresses of the plurality of site pages such that the address having the reference information related to the query information ranks high in the list information and to present the list information to a user.

According to the invention, there is provided a page acquisition method performed in a system including a plurality of site servers that are connected to a wide area network, a plurality of access points that transmit annunciation signals including their addresses, a portable terminal that is connected to the wide area network and acquires pages from the site servers, and a proxy server that includes an address correspondence table in which an address of a site page is associated with an address of each access point and is connected to the wide area network. The portable terminal stores query information for searching for the site page. The method includes: a first step of allowing the portable terminal to search for the access points in the vicinity of the portable terminal and to receive the annunciation signal including the address of the access point from each access point; a second step of allowing the portable terminal to transmit, to the proxy server, a page acquisition request including the address of each access point included in the annunciation signal; a third step of allowing the proxy server to search for the address of the site page corresponding to the address of each access point included in the page acquisition request, using the address correspondence table; a fourth step of allowing the proxy server to acquire the content of the site page with the searched address as reference information and to generate list information in which the reference information of the site page is associated with each of the addresses of a plurality of site pages; a fifth step of allowing the proxy server to transmit the list information as a response to the portable terminal; and a sixth step of allowing the portable terminal to arrange the addresses of the plurality of site pages such that the address having the reference information related to the query information ranks high in the list information and to present the list information to a user.

In the two page acquisition methods, in the sixth step, one or more page acquisition requests having one or more addresses in the list information as destinations may be transmitted to the corresponding site servers.

According to an embodiment of the two page acquisition methods, the reference information may be an update time related to the site page and the query information may be order designation information which is designated by the user. In the sixth step, the portable terminal may generate list information in which the searched addresses of a plurality of site pages are arranged in order of the update time which is the reference information according to the order designation information which is the query information.

According to another embodiment of the two page acquisition methods, the reference information may be a message or keyword group related to the site page and the query information may be a keyword which is designated by the user. In the sixth step, the portable terminal may generate list information in which the searched addresses of a plurality of site pages are arranged such that the message or keyword group, which is the reference information, including a larger number of keywords, which is the query information, ranks higher.

According to still another embodiment of the two page acquisition methods, the reference information may be an image related to the site page and the query information may be an image which is designated by the user. In the sixth step, the portable terminal may generate list information in which the searched addresses of a plurality of site pages are arranged in descending order of the similarity of the image which is the reference information to the image which is the query information.

According to yet another embodiment of the two page acquisition methods, the portable terminal may acquire positional information in advance on the basis of user's designation, a global positioning system (GPS) positioning method, or a base station positioning method. The reference information may be positional information related to the site page and the query information may be positional information of the portable terminal. In the sixth step, the portable terminal may generate list information in which the searched addresses of a plurality of site pages are arranged in increasing order of a distance between a position related to the positional information which is the query information and a position related to the positional information which is the reference information.

According to still yet another embodiment of the two page acquisition methods, the portable terminal may acquire a moving speed in advance using a GPS positioning method or a sensor positioning method. The reference information may be a moving speed range related to the site page and the query information may be a moving speed of the portable terminal. In the sixth step, the portable terminal may generate list information in which the searched addresses of a plurality of site pages are arranged such that the address where the moving speed range, which is the reference information, includes the moving speed, which is the query information, ranks high.

According to yet still another embodiment of the two page acquisition methods, the portable terminal may acquire temperature, atmospheric pressure, and/or humidity measured by a sensor in advance. The reference information may be a temperature range, an atmospheric pressure range, and/or a humidity range related to the site page and the query information may be the temperature, atmospheric pressure, and/or humidity of the portable terminal. In the sixth step, the portable terminal may generate list information in which the searched addresses of a plurality of site pages are arranged such that the address where the temperature range, the atmospheric pressure range, and/or the humidity range, which is the reference information, includes the temperature, the atmospheric pressure, and/or the humidity, which is the query information, ranks high.

According to still yet another embodiment of the two page acquisition methods, the reference information may be audio data related to the site page and the query information may be audio data which is acquired in advance by the portable terminal. In the sixth step, the portable terminal may generate list information in which the searched addresses of a plurality of site pages are arranged in descending order of the similarity of the audio data which is the reference information to the audio data which is the query information.

According to yet still another embodiment of the page acquisition methods according to the invention, the list information may be a Web page in which the addresses of a plurality of site pages are arranged. The address of the site page may be a uniform resource locator (URL). The address of the access point may be a media access control (MAC) address or a service set identifier (SSID).

According to still yet another embodiment of the page acquisition methods according to the invention, in the first step, the annunciation signal which is received from each access point by the portable terminal in the first step may be a beacon signal or a probe response of a wireless LAN. In the second step, the page acquisition request may be a GET request based on a hyper text transport protocol (HTTP).

According to yet still another embodiment of the page acquisition methods according to the invention, the system may further include a charging control server that is connected to the wide area network. The charging control server may manage account information about a publisher of the site page and account information about an operator of the proxy server. When any one of the addresses arranged in the list information is selected and the page acquisition request is transmitted to the site server, the portable terminal may transmit, to the charging control server, a charging instruction request to instruct the transmission of information about a predetermined amount of money from the account information about the publisher of the site page to the account information about the operator of the proxy server.

According to still yet another embodiment of the page acquisition methods according to the invention, when an address of a site page is added to the address of the access point in the address correspondence table, the proxy server may transmit, to the charging control server, a charging instruction request to instruct the transmission of information about a predetermined amount of money from account information about a publisher of the site page to the account information about the operator of the proxy server.

According to the invention, there is provided a system including: a plurality of site servers that are connected to a wide area network; a plurality of access points that transmit annunciation signals including their addresses; a portable terminal that is connected to the wide area network and acquires pages from the site servers; and a proxy server that is connected to the wide area network and includes an address correspondence table in which reference information related to a site page is associated with each set of an address of the access point and an address of the site page. The portable terminal includes: an annunciation signal reception element that searches for the access points in the vicinity of the portable terminal and receives the annunciation signal including the address of the access point from each access point; a first page acquisition request transmission element that transmits, to the proxy server, a page acquisition request including the address of each access point included in the annunciation signal and query information for searching for the reference information of the site page; and a second page acquisition request transmission element that presents the list information to a user. The proxy server includes: an address search element that searches for the address of the site page corresponding to the address of each access point included in the page acquisition request, using the address correspondence table; a list information generation element that generates list information in which the searched addresses of a plurality of site pages are arranged such that the address having the reference information related to the query information ranks high; and a list information response element that transmits the list information as a response to the portable terminal.

According to the invention, there is provided a system including: a plurality of site servers that are connected to a wide area network; a plurality of access points that transmit annunciation signals including their addresses; a portable terminal that is connected to the wide area network and acquires pages from the site servers; and a proxy server that is connected to the wide area network and includes an address correspondence table in which an address of a site page is associated with an address of each access point. The portable terminal includes: an annunciation signal reception element that searches for the access points in the vicinity of the portable terminal and receives the annunciation signal including the address of the access point from each access point; a first page acquisition request transmission element that transmits, to the proxy server, a page acquisition request including the address of each access point included in the annunciation signal and query information for searching for the site page; and a second page acquisition request transmission element that presents the list information to a user. The proxy server includes: an address search element that searches for the address of the site page corresponding to the address of each access point included in the page acquisition request, using the address correspondence table; a list information generation element that searches for the content of the site page with the searched address as reference information using the query information and generates list information in which the addresses of a plurality of site pages are arranged such that the address having the reference information related to the query information ranks high; and a list information response element that transmits the list information as a response to the portable terminal.

According to the invention, there is provided a system including: a plurality of site servers that are connected to a wide area network; a plurality of access points that transmit annunciation signals including their addresses; a portable terminal that is connected to the wide area network and acquires pages from the site servers; and a proxy server that is connected to the wide area network and includes an address correspondence table in which reference information related to a site page is associated with each set of an address of the access point and an address of the site page. The portable terminal stores query information for searching for the reference information of the site page and includes: an annunciation signal reception element that searches for the access points in the vicinity of the portable terminal and receives the annunciation signal including the address of the access point from each access point; a first page acquisition request transmission element that transmits, to the proxy server, a page acquisition request including the address of each access point included in the annunciation signal; and a second page acquisition request transmission element that arranges the addresses of a plurality of site pages such that the address having the reference information related to the query information ranks high in list information and presents the list information to a user. The proxy server includes: an address search element that searches for the address of the site page corresponding to the address of each access point included in the page acquisition request, using the address correspondence table; a list information generation element that generates list information in which the reference information of the site page is associated with each of the searched addresses of a plurality of site pages; and a list information response element that transmits the list information as a response to the portable terminal.

According to the invention, there is provided a system including: a plurality of site servers that are connected to a wide area network; a plurality of access points that transmit annunciation signals including their addresses; a portable terminal that is connected to the wide area network and acquires pages from the site servers; and a proxy server that is connected to the wide area network and includes an address correspondence table in which an address of a site page is associated with an address of each access point. The portable terminal stores query information for searching for the site page and includes: an annunciation signal reception element that searches for the access points in the vicinity of the portable terminal and receives the annunciation signal including the address of the access point from each access point; a first page acquisition request transmission element that transmits, to the proxy server, a page acquisition request including the address of each access point included in the annunciation signal; and a second page acquisition request transmission element that arranges the addresses of a plurality of site pages such that the address having the reference information related to the query information ranks high in list information and presents the list information to a user. The proxy server includes: an address search element that searches for the address of the site page corresponding to the address of each access point included in the page acquisition request, using the address correspondence table; a list information generation element that acquires the content of the site page with the searched address as reference information and generates list information in which the reference information of the site page is associated with each of the addresses of a plurality of site pages; and a list information response element that transmits the list information as a response to the portable terminal.

### EFFECT OF THE INVENTION

According to the method and system of the invention, it is possible to provide information which satisfies desired conditions among the site pages related to the current position to the portable terminal even at the position where a plurality of access points are searched, without the user making any selections.

### BRIEF DESCRIPTION OF DRAWINGS

Fig. 1 is a diagram schematically illustrating an embodiment of a system according to the invention;
Fig. 2 is a sequence diagram illustrating an embodiment of a page acquisition method according to the invention;
Fig. 3A and Fig. 3B are diagrams illustrating a simple example of an HTML source program as list information;
Fig. 4 is a sequence diagram illustrating another embodiment of the page acquisition method according to the invention;
Fig. 5 is a diagram illustrating an embodiment of query information and reference information according to the invention;
Fig. 6 is a functional diagram illustrating a charging control server according to the invention;
Fig. 7 is a functional diagram illustrating an embodiment of a proxy server and a portable terminal according to the invention; and
Fig. 8 is a diagram illustrating the structure of a system according to the related art which causes a portable terminal to acquire a site page.

### MODE(S) FOR CARRYING OUT THE INVENTION

Hereinafter, some exemplary embodiments of the invention will be described in detail with reference to the drawings.

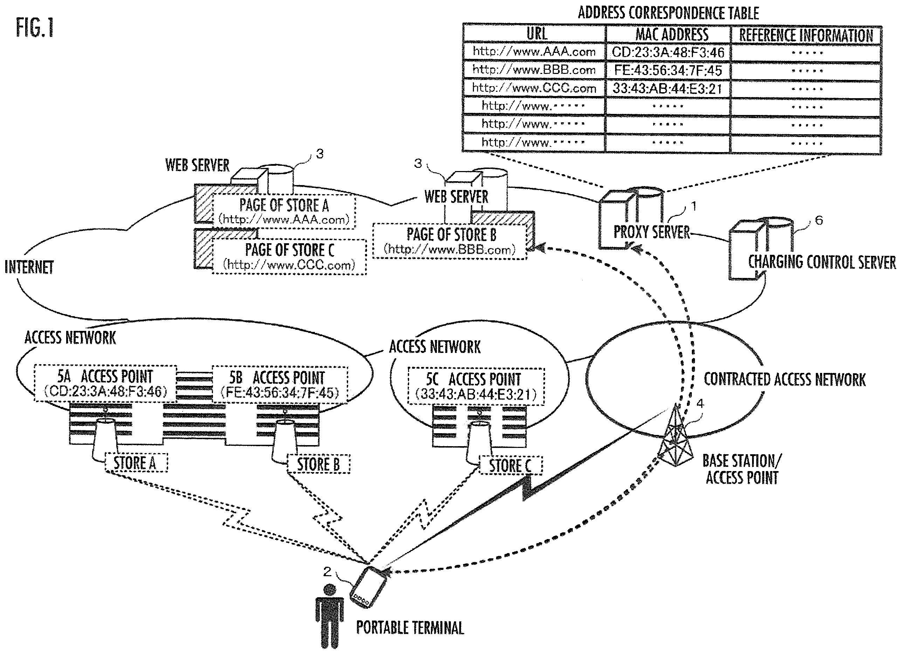

Fig. 1 is a diagram schematically illustrating an embodiment of a system according to the invention.

As illustrated in Fig. 1, similarly to Fig. 8, access points 5A, 5B, and 5C are installed in stores A, B, and C, respectively. In addition, a portable terminal 2 stays at a position where it can receive a beacon signal, which is an annunciation signal of a wireless LAN, from each of the access points 5A to 5C. The portable terminal 2 can be connected to the Internet through an access network with which the user of the portable terminal 2 contacts individually. The access network with which the portable terminal 2 contacts is not limited to the wireless LAN. For example, the access network may be a worldwide interoperability for microwave access (WiMAX) network, a long term evolution (LTE) network, or a 3rd generation (3G) network. The portable terminal 2 is, for example, a smart phone or a tablet terminal. For example, a Web browser is installed in the portable terminal 2 so as to render the site pages of the stores A to C on a display.

A unique media access control (MAC) address and a service set identifier (SSID) which is given by the user are allocated to each access point. In general, the user who operates the portable terminal 2 recognizes the SSID and determines whether to perform connection to the access point. In addition, similarly to Fig. 8, the site pages, which are the advertisement media of each of the stores A to C, can be distributed by a Web server 3 on the Internet. A uniform resource locator (URL) is allocated as an address to the site page. In general, the user who operates the portable terminal 2 recognizes the URL and determines whether to access the site page.

As illustrated in Fig. 1, a "proxy server" 1 is connected to the Internet which is a wide area network. The portable terminal 2 of the user accesses the proxy server 1 through a base station/access point 4. In addition, the proxy server 1 stores the following "address correspondence table":

### [Address Correspondence Table]

(URL1) <-> (MAC address 1) <-> (reference information 1);
(URL2) <-> (MAC address 2) <-> (reference information 2);
(URL3) <-> (MAC address 3) <-> (reference information 3); and ...........

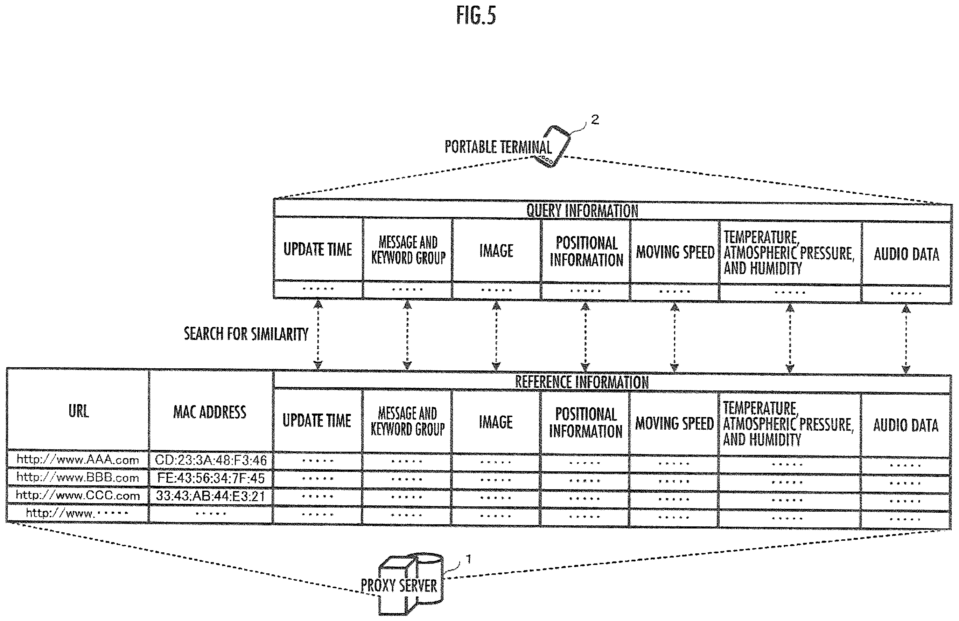

In the address correspondence table, "reference information" related to the site page is associated with a set of the address of the access point and the address of the site page. Here, examples of the reference information include an "update time", a "message and keyword group", an "image", "positional information", a "moving speed", "temperature, atmospheric pressure, and humidity", and/or "audio data", which will be described below with reference to Fig. 5. In addition, the "reference information related to the site page" is not limited to the address of the site page and may be, for example, the content of a page which is arranged in the same layer as the site page or the content of a page for a link to a lower layer of the site page.

In the address correspondence table, any of the MAC address and the SSID may be associated with the URL. However, the MAC address which is globally uniquely allocated is preferable. The reason is that, in some cases, the same SSID is allocated to different access points.

Similarly, as illustrated in Fig. 1, a "charging control server" 6 is also connected to the Internet. The charging control server 6 manages account information about a site page publisher and account information about a proxy server operator. When the sequence according to the invention is performed, the charging control server 6 can create a business model in which the site page publisher (storekeeper) pays a predetermined amount of memory as an advertisement rate to the proxy server operator (a service provider according to the invention).

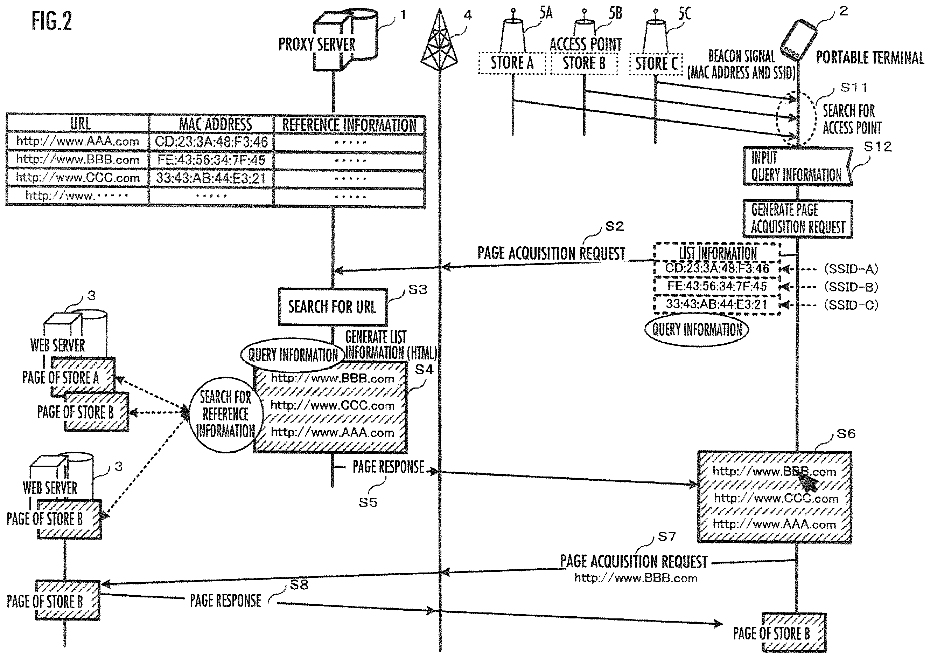

Fig. 2 is a sequence diagram illustrating an embodiment of a page acquisition method according to the invention.

(S1) First, the portable terminal 2 turns on a communication interface of the wireless LAN and searches for neighboring access points for a predetermined period of time. The access points 5A to 5C installed in the stores A to C constantly broadcast the beacon signals including the MAC addresses and the SSIDs, which are their addresses, as the annunciation signals. The portable terminal 2 receives the beacon signals and recognizes that the access points 5A to 5C are present in the vicinity of the portable terminal 2.

Alternatively, the portable terminal 2 may broadcast a probe request to the neighboring access points and receive probe responses from the access points which have received the probe request. In this case, the portable terminal 2 receives the probe responses and recognizes that the access points 5A to 5C are present in the vicinity of the portable terminal 2.

The access points 5A to 5C are not necessarily connected to the Internet through the access network. The access points 5A to 5C preferably transmit at least the beacon signal or the probe response. The access point is not a characteristic component of the invention and is just the existing component.

(S2) The portable terminal 2 generates a "page acquisition request" including the following information:
- the "addresses of a plurality of access points" (acquired by the beacon signals or the probe responses); and
- "query information" (used to search for the reference information of the site page).

Here, examples of the "query information" include an "update time", a "message and keyword group", an "image", "positional information", a "moving speed", "temperature, atmospheric pressure, and humidity", and/or "audio data" corresponding to the reference information, which will be described below with reference to Fig. 5.

As illustrated in Fig. 2, the page acquisition request includes three addresses of the access points 5A to 5C and query information that is desired by the user. However, the addresses are not the designation of the page acquisition request and are included in a data portion of the page acquisition request. The page acquisition request is a GET request based on a hyper text transport protocol (HTTP). The portable terminal 2 transmits the page acquisition request to the proxy server 1.

However, it is assumed that the portable terminal 2 has known the URL of the proxy server 1. In addition, as illustrated in Fig. 2, it is assumed that three MAC addresses of the access points 5A to 5C are included in the data portion of the page acquisition request.

(S3) The proxy server 1 searches for a URL, which is the address of the site page corresponding to the address of each access point included in the received page acquisition request, using the "address correspondence table". As illustrated in Fig. 2, the following URLs of three site pages corresponding to three MAC addresses of the access points 5A to 5C are searched:
http://www.AAA.com/ (the address of the site page of the store A);
http://www.BBB.com/ (the address of the site page of the store B); and
http://www.CCC.com/ (the address of the site page of the store C).

(S4) The proxy server 1 generates list information using one of the following two embodiments.
(1) The proxy server 1 generates list information in which the searched addresses of a plurality of site pages are arranged such that the address having the reference information related to the query information ranks high, that is, list information in which the searched addresses are arranged such that the address having the reference information related to the query information has a high rank. In this embodiment, the reference information has been stored in the address correspondence table.
(2) The proxy server 1 searches for the content of the site page with the searched address as the reference information, using the query information, and generates list information in which the addresses of a plurality of site pages are arranged such that the address having the reference information related to the query information ranks high, that is, list information in which the addresses are arranged such that the address having the reference information related to the query information has a high rank. In this embodiment, the address correspondence table does not store the reference information. That is, when receiving the page acquisition request from the portable terminal 2, the proxy server 1 acquires the content of the site server as the reference information in real time. However, the "content of the site page" is not limited to the content at the address of the site page and may be the content of a page in the same layer as the site page or the content of a page for a link to the lower layer of the site page.

The list information includes the arranged addresses of a plurality of site pages. However, the list information may be a hyper text markup language (HTML) source program. As illustrated in Fig. 2, in the list information, the addresses of the site pages are arranged as follows:
the site page of store name B = "http://www.BBB.com";
the site page of store name C = "http://www.CCC.com"; and
the site page of store name A = "http://www.AAA.com".

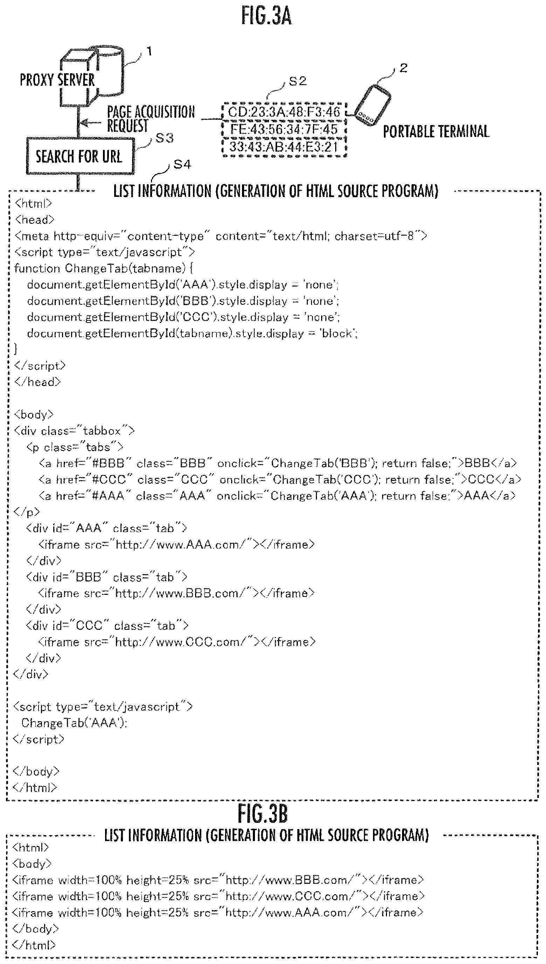

Figs. 3A and 3B are simple examples of the HTML source program as the list information.

In the HTML source program illustrated in Fig. 3A, a store name B = "BBB", a store name C = "CCC", and a store name A = "AAA" are displayed as tabs on the browser on the basis of the query information and the user clicks any one of the tabs to select the store name. When the user clicks any one of the tabs, the site page corresponding to the tap is displayed on the browser.

In the HTML source program illustrated in Fig. 3B, all of the site pages are displayed on the browser in the following order on the basis of the query information:
the site page of store name B = "http://www.BBB.com";
the site page of store name C = "http://www.CCC.com"; and
the site page of store name A = "http://www.AAA.com".

However, in the case of the source program illustrated in Fig. 3B, the user does not click to select the site page and all of the site pages are displayed so as to be arranged horizontally and vertically.

Returning to Fig. 2, (S5) the proxy server 1 transmits the generated HTML source program as a response to the portable terminal 2. The HTML source program as the list information is included in a "page response", that is, a GET response based on the HTTP.

(S6) The portable terminal 2 is, for example, a smart phone or a tablet terminal and a WWW browser is installed in the portable terminal 2 in advance. Therefore, the portable terminal 2 can immediately render the HTML source program as the list information included in the page response and display the HTML source program on the browser. The user may browse messages for each store in the list of the site pages displayed on the portable terminal 2. In this case, the user can recognize that desired information is more likely to be displayed in the store based on the site page having a higher rank in the arranged list of the site pages. That is, the user can sequentially browse the stores having the site pages on which desired information is displayed among nearby stores and search for desired stores at a glance.

Here, when the HTML source program illustrated in Fig. 3A is received, the user can click and select the address (tab) of a desired page while browsing the list information displayed on the display of the portable terminal 2. In contrast, when the HTML source program illustrated in Fig. 3B is received, the same operation as that when the user implicitly clicks the addresses (tabs) of all of three pages is performed.

(S7) The portable terminal 2 transmits the page acquisition request (GET request) in which the address of the site page selected by the user is the destination to the Web server storing the site page of the store. As illustrated in Fig. 3, for example, the user clicks the address of the store B. In this case, the portable terminal 2 transmits the GET request in which the site page = "http://www.BBB.com" of the store name B is the destination.

(S8) The Web server which stores the site page of the store name B receives the GET request and transmits a page response including the site page of the store name B to the portable terminal 2. Therefore, the user can browse the site page of the store B with the portable terminal 2.

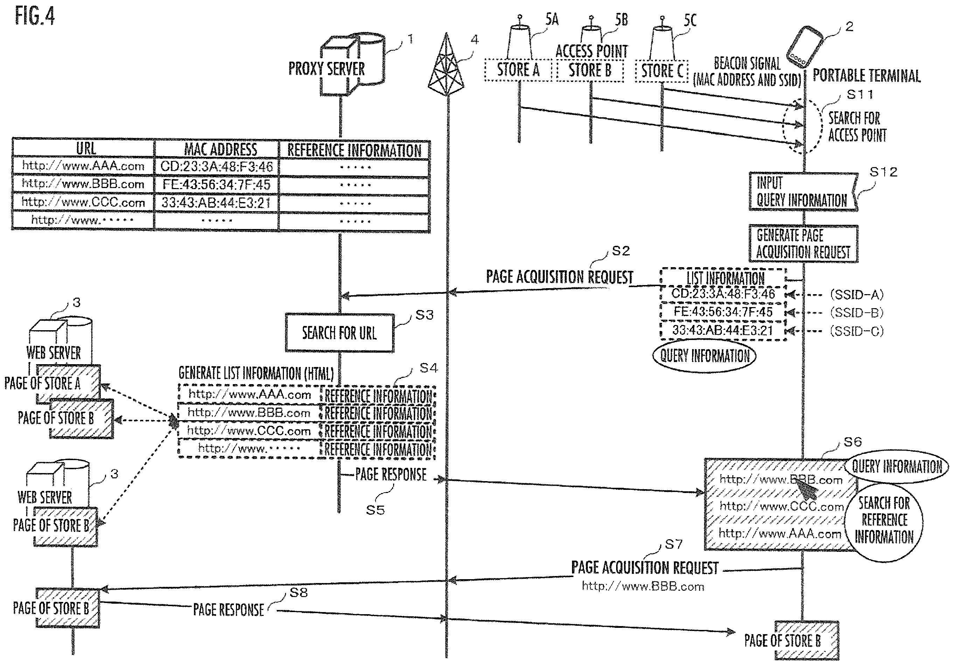

Fig. 4 is a sequence diagram illustrating another embodiment of the page acquisition method according to the invention.

The sequence illustrated in Fig. 4 differs from the sequence illustrated in Fig. 2 only in Steps S4 and S6. That is, while the URLs of the site pages based on the query information are sorted by the proxy server 1 in Fig. 2, the URLs are sorted by the portable terminal 2 in Fig. 4. Hereinafter, the content of Steps S4 and S6 illustrated in Fig. 4 will be described.

(S4) The proxy server 1 generates list information in which the reference information of a plurality of searched site pages is associated with the addresses of the plurality of searched site pages. As illustrated in Fig. 4, the proxy server 1 generates only the list information of URLs which are the addresses of the site pages. In Step S5, only the list information is transmitted to the portable terminal 2.

(S6) The portable terminal 2 arranges the addresses of a plurality of site pages such that the address having the reference information related to the query information ranks high in the received list information. Then, the portable terminal 2 generates an HTML source program based on the list information. Then, the portable terminal 2 immediately renders the HTML source program and displays the HTML source program on the browser. Since the recent smart phones or tablet terminals have high arithmetic processing capability, an excessive load is not applied to the HTML source program generation process of the portable terminal 2. Therefore, it is possible to reduce the amount of data of the page response between the proxy server 1 and the portable terminal 2 to maximize the communication rate.

Fig. 5 is a diagram illustrating an embodiment of the query information and the reference information according to the invention.

According to the embodiment illustrated in Fig. 5, the query information and the reference information include elements (items), such as an "update time", a "message and keyword group", an "image", "positional information", a "moving speed", "temperature, atmospheric pressure, and humidity", and/or "audio data".

### [Update Time]

For example, the reference information is an "update time" related to the site page and is, for example, the following:
(1) the update time of the site page;
(2) the update time when the address is registered in the address correspondence table; and
(3) the update time of the "reference information".

In contrast, the query information is, for example, "order designation information" designated by the user and is the following:
(1) the reverse chronological order of the update time; and
(2) the chronological order of the update time after xx (hour)/xx (day)/xx (month).

In this case, in Step S4 illustrated in Fig. 2 or Step S6 illustrated in Fig. 4, the proxy server 1 or the portable terminal 2 generates list information in which the searched addresses of a plurality of site pages are arranged in order of the update time, which is the reference information, according to the order designation information which is the query information.

### [Message and Keyword Group]

As another example, the reference information is a "message or keyword group" related to the site page and is, for example, the following:
(1) for example, an advertising "message", such as "cheap bar!", "arrival today and fresh sliced raw fish", or "Italian food is good"; and
(2) for example, a "keyword group", such as "bar", "cheap", "sliced raw fish", or "Italian food".

The "message and keyword group" is registered in the address correspondence table of the proxy server 1 by, for example, the following method:
(1) the "message and keyword group" is registered by the user who has the site page; and
(2) the "message and keyword group" is extracted from the text of the site page and is then registered.

For example, even when there is a long text in the site page, the text can be divided into morphemes by morphological analysis and dozens of top morphemes with a high appearance of frequency can be registered as a "keyword group".

In contrast, the query information is, for example, a keyword which is designated by the user. Here, the user may input a voice to a microphone which is provided in the portable terminal 2 and audio data may be converted to generate a keyword. This is the same as a search interface using speech recognition in the existing smart phone.

In this case, in Step S4 illustrated in Fig. 2 or Step S6 illustrated in Fig. 4, the proxy server 1 or the portable terminal 2 may generate list information in which the searched addresses of a plurality of site pages are arranged such that the message or the keyword group, which is the reference information, including a larger number of keywords, which are the query information, ranks higher. In addition, the proxy server 1 or the portable terminal 2 may generate list information in which the addresses are arranged such that the message or the keyword group, which is the reference information, including a larger number of keywords, which are the query information, has a higher rank.

### [Image]

As still another example, the reference information is an "image" related to the site page.

In contrast, the query information is, for example, an "image" designated by the user.

The "image" is registered in the address correspondence table of the proxy server 1 by, for example, the following method:
(1) the "image" is registered by the user who has the site page; and
(2) the "image" is acquired from the image of the site page and is then registered.

In this case, in Step S4 illustrated in Fig. 2 or Step S6 illustrated in Fig. 4, the proxy server 1 or the portable terminal 2 may generate list information in which the searched addresses of a plurality of site pages are arranged in descending order of the similarity of the image which is the reference information to the image which is the query information.

However, a basic technique based on R, G, and B color information or other techniques can be applied as a method for calculating the similarity between the images.

### [Positional Information]

As yet another example, the reference information is "positional information" related to the site page. For example, the reference information may be an "address", "latitude and longitude", or a "neighboring base station identifier (ID)".

In contrast, the query information is, for example, the positional information of the portable terminal. For example, the portable terminal 2 acquires the positional information in advance, on the basis of the user's designation, a GPS positioning method, or a base station positioning method. However, examples of the position acquisition method are as follows:
"User's designation": the user designates, for example, the user's home or work address;
A "GPS positioning method": the portable terminal has a GPS function and positioning is performed using satellite radio waves; and
A "base station positioning method": positioning is roughly performed using a control signal transmitted from a base station of a mobile network.

In this case, in Step S4 illustrated in Fig. 2 or Step S6 illustrated in Fig. 4, the proxy server 1 or the portable terminal 2 generates list information in which the searched addresses of a plurality of site pages are arranged in increasing order of the distance between the position related to the positional information which is the query information and the position related to the positional information which is the reference information.

### [Moving Speed]

As still yet another example, the reference information is a "moving speed range" related to the site page. For example, the following moving speed ranges are set:
"Walking": ×× km/h to ×× km/h;
"Car": ×× km/h to ×× km/h;
"Train": ×× km/h to ×× km/h; and

In contrast, the query information is, for example, a moving speed which is measured by the portable terminal. The portable terminal 2 acquires the moving speed in advance using the GPS positioning method or a sensor positioning method. The GPS positioning method measures the latitude and longitude at least at two points of time and divides the distance between the two positioning points by the time between the points of time to calculate the moving speed. The sensor positioning method may measure, for example, the number of steps using an acceleration sensor to calculate the moving speed.

In this case, in Step S4 illustrated in Fig. 2 or Step S6 illustrated in Fig. 4, the proxy server 1 or the portable terminal 2 generates list information in which the searched addresses of a plurality of site pages are arranged such that the address where the moving speed range, which is the reference information, including the moving speed, which is the query information, ranks high, that is, list information in which the searched addresses are arranged such that the address where the moving speed range, which is the reference information, including the moving speed, which is the query information, has a higher rank.

For example, only the user of the portable terminal with a low moving speed as in the case of movement on foot can browse the site page of the store which wants to attract customers who walk to the store. In contrast, only the user of the portable terminal with a high moving speed as in the case of movement by car can browse the site page of the store which wants to attract customers who drive to the store.

### [Temperature, Atmospheric Pressure, and Humidity]

As yet still another example, the reference information is a "temperature range", an "atmospheric pressure range", and/or a "humidity range" related to the site page. For example, the following temperature range, atmospheric pressure range, and/or humidity range is set:
"Clear": a temperature of ××° to ××°, an atmospheric pressure of ×× Pa to ×× Pa, and a humidity of ××% to ××%;
"Cloudy": a temperature of ××° to ××°, an atmospheric pressure of ×× Pa to ×× Pa, and a humidity of ××% to ××%; and
"Rainy": a temperature of ××° to ××°, an atmospheric pressure of ×× Pa to ×× Pa, and a humidity of ××% to ××%.

In contrast, the query information is temperature, atmospheric pressure, and/or humidity measured by the portable terminal. The portable terminal can acquire temperature, atmospheric pressure, and/or humidity as measured values using a temperature sensor, an atmospheric pressure sensor, and/or a humidity sensor.

In this case, in Step S4 illustrated in Fig. 2 or Step S6 illustrated in Fig. 4, the proxy server 1 or the portable terminal 2 generates list information in which the searched addresses of a plurality of site pages are arranged such that the address where the temperature range, the atmospheric pressure range, and/or the humidity range, which is the reference information, including the temperature, the atmospheric pressure, and/or the humidity, which is the query information, ranks high, that is, list information in which the searched addresses are arranged such that the address where the temperature range, the atmospheric pressure range, and/or the humidity range, which is the reference information, including the temperature, the atmospheric pressure, and/or the humidity, which is the query information, has a higher rank.

For example, only the user of the portable terminal having the measured values of temperature, atmospheric pressure, and humidity in the "clear" range can browse the site page of the store which wants to attract customers who visit the store on a clear day. In contrast, only the user of the portable terminal having the measured values of temperature, atmospheric pressure, and humidity in the "rainy" range can browse the site page of the store which wants to attract customers who visit the store on a rainy day.

However, the "update time", the "message and keyword group", the "image", the "positional information", the "moving speed", the "temperature, atmospheric pressure, and humidity", and the "audio data" may be described in each site page of the HTML source program such that the update time and the message are also associated with each other.

### [Audio Data]

As still yet another example, the reference information is "audio data" related to the site page.

In contrast, the query information is, for example, "audio data" which has been acquired in advance by the portable terminal.

In this case, in Step S4 illustrated in Fig. 2 or Step S6 illustrated in Fig. 4, the proxy server 1 or the portable terminal 2 generates list information in which the searched addresses of a plurality of site pages are arranged in descending order of the similarity of the audio data which is the reference information to the audio data which is the query information.

However, for example, a technique which compares the audio data using frequency analysis or other techniques can be applied as a method for calculating the similarity between the audio data.

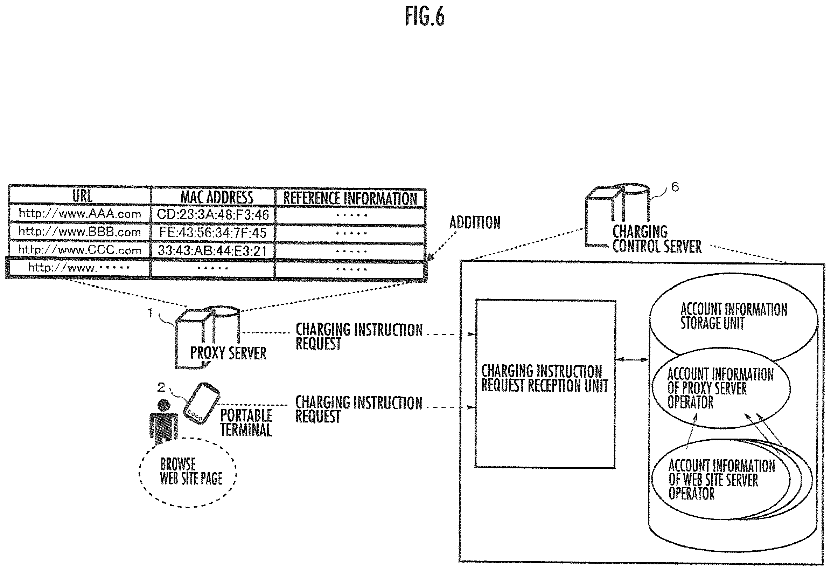

Fig. 6 is a diagram illustrating the function of the charging control server according to the invention.

The charging control server 6 creates a business model in which the site page publisher (storekeeper) pays a predetermined amount of money as an advertisement rate to the proxy server operator (a service provider in the invention). Hereinafter, two model sequences will be described.

### (First Model Sequence)

In Step S7 illustrated in Figs. 2 and 4, when the user selects any one of the addresses in the list information, the portable terminal 2 transmits the page acquisition request to the Web server 3. In this case, the portable terminal 2 further transmits a "charging instruction request" to the charging control server 6. The charging instruction request is an instruction to transmit information about a predetermined amount of money from account information about the site page publisher to account information about the proxy server operator.

It is preferable to insert a control code for transmitting the charging instruction request when the HTML source program is generated in Step S4. For example, it is preferable to insert the control code such that the portable terminal 2 transmits the following URL to the proxy server 1:
http://www.proxy.com/billing/AAA/PROXY/100.

The URL instructs a proxy server "www.proxy.com" to transmit information about a predetermined amount of money "100 yen" from account information about a site page publisher AAA to account information about a proxy server operator PROXY.

### (Second Model Sequence)

The proxy server 1 stores the address correspondence table. When the site page publisher (storekeeper) additionally registers a URL and a MAC address in the access correspondence table, the proxy server 1 transmits a "charging instruction request" to the charging control server 6. The charging instruction request is an instruction to transmit information about a predetermined amount of money from account information about the site page publisher to account information about the proxy server operator. A control code for transmitting the charging instruction request may be the same as that in the URL.

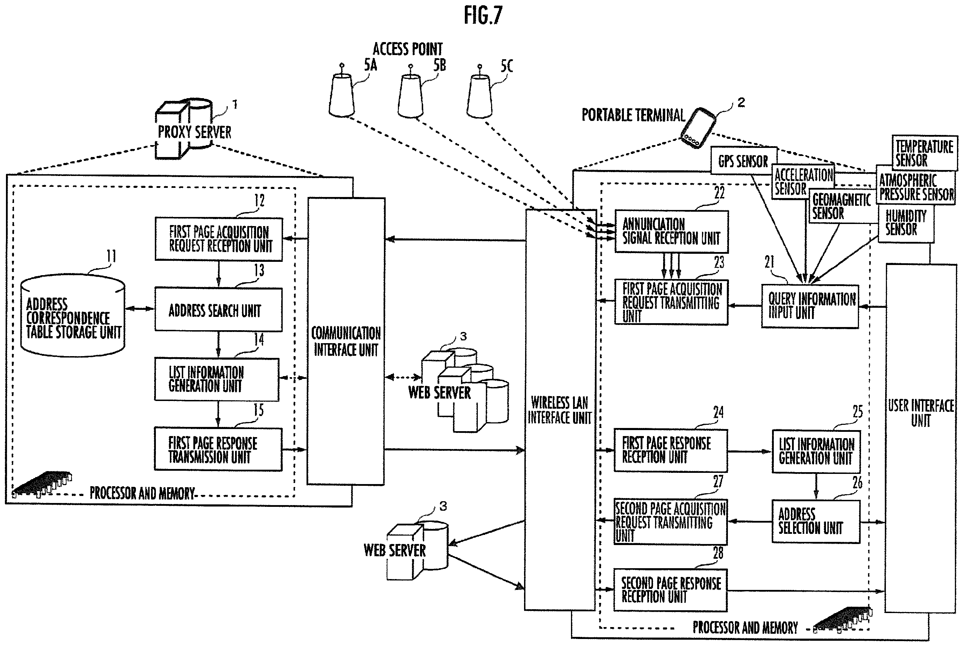

Fig. 7 is a functional block diagram illustrating an embodiment of the proxy server and the portable terminal according to the invention.

### [Portable Terminal 2]

As illustrated in Fig. 7, the portable terminal 2 includes a wireless LAN interface unit connected to a wireless LAN and a user interface unit such as a touch panel display. In addition, the portable terminal 2 includes a query information input unit 21, an annunciation signal reception unit 22, a first page acquisition request transmission unit 23, a first page response reception unit 24, a list information generation unit 25, an address selection unit 26, a second page acquisition request transmission unit 27, and a second page response reception unit 28. The functional components of the portable terminal 2 except for the wireless LAN interface unit and the user interface unit are implemented by executing a program which causes a computer provided in the portable terminal 2 to operate.

The query information input unit 21 acquires the query information corresponding to Fig. 5 from the user interface unit or various sensors. The acquired query information is output to the first page acquisition request transmission unit 23.

The annunciation signal reception unit 22 searches for the access points which are present in the vicinity of the portable terminal and receives the annunciation signal including the address of the access point from each access point (see the above-mentioned Step S1). The address included in the annunciation signal is output to the first page acquisition request transmission unit 23.

The first page acquisition request transmission unit 23 transmits the page acquisition request including the query information and the addresses of a plurality of access points included in the annunciation signals to the proxy server 1 (see the above-mentioned Step S2).

The first page response reception unit 24 receives the page response including the list information from the proxy server 1 (see the above-mentioned Step S6). The received list information is output to the list information generation unit 25.

The list information generation unit 25 arranges the addresses of a plurality of site pages such that the address having the reference information related to the query information ranks high in the received list information. Then, the list information generation unit 25 generates the HTML source program from the list information. Here, when the list information is the HTML source program generated by the proxy server 1, the list information generation unit 25 performs no process. The generated or received HTML source program is output to the address selection unit 26.

The address selection unit 26 renders the input HTML source program and displays the HTML source program on the browser through the user interface unit. Here, the portable terminal waits until the user selects by clicking any one of the addresses of the site pages (see the above-mentioned Step S6). The selected address of the site page is output to the second page acquisition request transmission unit 27. However, when the HTML source program illustrated in Fig. 3B is used, the process is performed assuming that all of the site pages of the list information are selected by the user.

The second page acquisition request transmission unit 27 transmits one or more page acquisition requests having one or more addresses as the destinations to the Web server 3 (see the above-mentioned Step S7).

The second page response reception unit 28 receives a page response including the site page from the Web server 3 and renders the site page such that the user browses the site page through the user interface unit 21 (see the above-mentioned Step S8).

### [Proxy Server 1]

As illustrated in Fig. 7, the proxy server 1 includes, as hardware, a communication interface unit connected to the Internet which is a wide area network. In addition, the proxy server 1 includes an address correspondence table storage unit 11, a first page acquisition request unit 12, an address search unit 13, a list information generation unit 14, and a first page response transmission unit 15. The functional components of the proxy server 1 except for the communication interface unit are implemented by executing a program that causes a computer provided in the proxy server 1 to operate.

The address correspondence table storage unit 11 stores the address correspondence table in which the reference information related to the site page is associated with each set of the address of the access point and the address of the site page (see the table illustrated in Fig. 5). However, the address correspondence table storage unit 11 may not store the reference information. In this case, the list information generation unit 14 which will be described below acquires the content of the site server as the reference information in real time.

The first page acquisition request unit 12 receives the page acquisition request including the addresses of a plurality of access points from the portable terminal 2. The received addresses of the access points are output to the address search unit 13.

The address search unit 13 searches for the addresses of the site pages corresponding to the addresses of the access points included in the page acquisition request using the address correspondence table (see the above-mentioned Step S3). The searched addresses of the site pages are output to the list information generation unit 14.

The list information generation unit 14 generates the list information in which the searched addresses of a plurality of site pages are arranged such that the address having the reference information related to the query information ranks high. Here, the list information generation unit 14 may further generate the HTML source program from the list information. In contrast, in Step S4 of Fig. 4, the list information generation unit 14 performs no process. The generated HTML source program is output to the first page response transmission unit 15.

In an embodiment in which the reference information is not stored in the address correspondence table storage unit 11, the list information generation unit 14 searches for the content of the site page with the searched address as the reference information, using the query information. That is, when receiving the page acquisition request from the portable terminal 2, the list information generation unit 14 acquires the content of the site server as the reference information in real time.

The first page response transmission unit 15 transmits a page response including the list information to the portable terminal 2 (see the above-mentioned Step S5).

As described in detail above, according to the method and system of the invention, it is possible to provide information which satisfies desired conditions among the site pages related to the current position to the portable terminal even at the position where a plurality of access points are searched, without the user selecting the site page.

For example, the method and system according to the invention can be useful when the user searches for a desired store in the vicinity of the station. The user of the portable terminal can see a list of the addresses of the site pages of various nearby stores, in which the addresses are arranged such that the address having desired information ranks higher, only by turning on the communication interface of the wireless LAN and searching for the access points which are present in the vicinity of the user. Then, the user can click any one of the addresses to browse the site page of the corresponding store. invention enables a plurality of persons who stay in the vicinity of the store to browse the site page.

Those skilled in the art can readily change, modify, and omit the above-described embodiments of the invention, without departing from the technical scope of the invention. The above-described embodiments are illustrative and the invention is not limited to the above-described embodiments. The invention is limited only by the claims.

### EXPLANATIONS OF LETTERS OR NUMERALS

- 1: PROXY SERVER
- 10: COMMUNICATION INTERFACE UNIT
- 11: ADDRESS CORRESPONDENCE TABLE STORAGE UNIT
- 12: FIRST PAGE ACQUISITION REQUEST TRANSMISSION UNIT
- 13: ADDRESS SEARCH UNIT
- 14: LIST INFORMATION GENERATION UNIT
- 15: FIRST PAGE RESPONSE TRANSMISSION UNIT
- 2: PORTABLE TERMINAL
- 21: QUERY INFORMATION INPUT UNIT
- 22: ANNUNCIATION SIGNAL RECEPTION UNIT
- 23: FIRST PAGE ACQUISITION REQUEST TRANSMISSION UNIT
- 24: FIRST PAGE RESPONSE RECEPTION UNIT
- 25: LIST INFORMATION GENERATION UNIT
- 26: ADDRESS SELECTION UNIT
- 27: SECOND PAGE ACQUISITION REQUEST TRANSMISSION UNIT
- 28: SECOND PAGE RESPONSE RECEPTION UNIT
- 3: WEB SERVER
- 4: CONTRACTED BASE STATION/ACCESS POINT
- 5: ACCESS POINT
- 6: CHARGING CONTROL SERVER

## Claims

1. A page acquisition method performed in a system including a plurality of site servers (3) that are connected to a wide area network, a plurality of access points (5A, 5B, 5C) that transmit annunciation signals including their addresses, a portable terminal (2) that is connected to the wide area network and acquires pages from the site servers (3), and a proxy server (1) that includes an address correspondence table in which an update time related to a site page is associated with each set of an address of the access point (5A, 5B, 5C) and an address of the site page, wherein the proxy server (1) is connected to the wide area network, the method comprising:
a first step of searching, by the portable terminal, for the access points (5A, 5B, 5C) in a vicinity of the portable terminal (2) and receiving, by the portable terminal (2) from each access point (5A, 5B, 5C), the annunciation signal of each access point (5A, 5B, 5C) including the address of the access point ;
a second step of transmitting, by the portable terminal (2) and to the proxy server (1), a page acquisition request including the address of each access point (5A, 5B, 5C) included in the annunciation signal of each access point and order designation information which is designated by the user, wherein the order designation information is for searching for the update time of the site page;
a third step of searching, by the proxy server (1) using the address correspondence table, for the address of the site page corresponding to the address of each access point (5A, 5B, 5C) included in the page acquisition request, using the address correspondence table;
a fourth step of generating, by the proxy server (1), list information in which searched addresses of a plurality of site pages are arranged in order of the update time according to the order designation information;
a fifth step of transmitting, by the proxy server (1), the list information as a response to the portable terminal (2); and
a sixth step of presenting, by the portable terminal (2), the list information to a user.

2. The page acquisition method according to claim 1,
wherein, in the sixth step, one or more page acquisition requests having one or more addresses in the list information as destinations are transmitted, by the portable terminal (2), to the corresponding site servers (3).

## Patentansprüche

1. Seitenbeschaffungsverfahren, das in einem System durchgeführt wird, welches eine Vielzahl von Site-Servern (3), die mit einem Weitbereichsnetzwerk verbunden sind, eine Vielzahl von Zugangspunkten (5a, 5B, 5C), die Meldungssignale übertragen, die deren Adressen einschließen, ein tragbares Endgerät (2), das mit dem Weitbereichsnetzwerk verbunden ist und Seiten von den Site-Servern (3) beschafft, und einen Proxy-Server (1) einschließt, der eine Adressenentsprechungstabelle einschließt, in der jedem Satz von einer Adresse des Zugangspunkts (5A, 5B, 5C) und einer Adresse der Site-Seite eine mit einer Site-Seite zusammenhängende Aktualisierungszeit zugeordnet ist, wobei der Proxy-Server (1) mit dem Weitbereichsnetzwerk verbunden ist, wobei das Verfahren umfasst:
einen ersten Schritt, in dem durch das tragbare Endgerät nach den Zugangspunkten (5A, 5B, 5C) in der Nähe des tragbaren Endgeräts (2) gesucht wird und durch das tragbare Endgerät (2) von jedem Zugangspunkt (5A, 5B, 5C) das Meldungssignal jedes Zugangspunkts (5A, 5B, 5C) empfangen wird, welches die Adresse des Zugangspunkts einschließt;
einen zweiten Schritt, in dem durch das tragbare Endgerät (2) und an den Proxy-Server (1) eine Seitenbeschaffungsanfrage übertragen wird, die die Adresse jedes Zugangspunkts (5A, 5B, 5C), die in das Meldungssignal jedes Zugangspunktes eingeschlossen ist, sowie Reihenfolgeangabeinformationen einschließt, die durch den Benutzer angegeben werden, wobei die Reihenfolgeangabeinformationen zum Suchen nach der Aktualisierungszeit der Site-Seite dienen;
einen dritten Schritt, in dem durch den Proxy-Server (1) unter Verwendung der Adressenentsprechungstabelle nach der Adresse der Site-Seite gesucht wird, die der Adresse jedes Zugangspunkts (5A, 5B, 5C) entspricht, die in die Seitenbeschaffungsanfrage eingeschlossen ist;
einen vierten Schritt, in dem durch den Proxy-Server (1) Listeninformationen generiert werden, in denen gesuchte Adressen von einer Vielzahl von Site-Seiten nach Reihenfolge der Aktualisierungszeit gemäß den Reihenfolgeangabeinformationen angeordnet sind;
einen fünften Schritt, in dem durch den Proxy-Server (1) die Listeninformationen als Antwort an das tragbare Endgerät (2) übertragen werden; und
einen sechsten Schritt, in dem die Listeninformationen durch das tragbare Endgerät (2) einem Benutzer präsentiert werden.

2. Seitenbeschaffungsverfahren nach Anspruch 1, wobei in dem sechsten Schritt eine oder mehrere Seitenbeschaffungsanfragen, die eine oder mehrere Adressen in den Listeninformationen als Ziele aufweisen, durch das tragbare Endgerät (2) an die entsprechenden Site-Server (3) übertragen werden.

## Revendications

1. Procédé d'acquisition de page réalisé dans un système comprenant une pluralité de serveurs de site (3) qui sont connectés à un réseau étendu, une pluralité de points d'accès (5A, 5B, 5C) qui transmettent des signaux d'annonce incluant leurs adresses, un terminal portable (2) qui est connecté au réseau étendu et acquiert des pages des serveurs de site (3), et un serveur proxy (1) qui comprend une table de correspondance d'adresses dans laquelle une heure de mise à jour relative à une page de site est associé à chaque ensemble constitué d'une adresse du point d'accès (5A, 5B, 5C) et d'une adresse de la page de site, le serveur proxy (1) étant connecté au réseau étendu, le procédé comprenant :
une première étape de recherche, par le terminal portable, des points d'accès (5A, 5B, 5C) à proximité du terminal portable (2) et de réception, par le terminal portable (2) de la part de chaque point d'accès (5A, 5B, 5C), du signal d'annonce de chaque point d'accès (5A, 5B, 5C) comprenant l'adresse du point d'accès;
une deuxième étape de transmission, par le terminal portable (2) et à destination du serveur proxy (1), d'une demande d'acquisition de page comprenant l'adresse de chaque point d'accès (5A, 5B, 5C) inclus dans le signal d'annonce de chaque point d'accès et des informations de désignation de commande qui sont désignées par l'utilisateur, les informations de désignation de commande étant pour rechercher l'heure de la mise à jour de la page du site ;
une troisième étape de recherche, par le serveur proxy (1) en utilisant la table de correspondance d'adresses, de l'adresse de la page du site correspondant à l'adresse de chaque point d'accès (5A, 5B, 5C) inclus dans la demande d'acquisition de page;
une quatrième étape de génération, par le serveur proxy (1), des informations de liste dans lesquelles les adresses recherchées d'une pluralité de pages de site sont disposées dans l'ordre de l'heure de mise à jour en fonction des informations de désignation de commande ;
une cinquième étape de transmission, par le serveur proxy (1), de l'information de liste en réponse au terminal portable (2) ; et
une sixième étape de présentation, par le terminal portable (2), des informations de la liste à un utilisateur.

2. Procédé d'acquisition de pages selon la revendication 1, dans lequel, à la sixième étape, une ou plusieurs demandes d'acquisition de pages ayant une ou plusieurs adresses dans les informations de liste en tant que destinations sont transmises, par le terminal portable (2), aux serveurs de site correspondants (3).
